# EUROPÄISCHE PATENTSCHRIFT

(11) **EP 1 353 824 B1**
(45) Veröffentlichungstag und Bekanntmachung des Hinweises auf die Patenterteilung: **23.10.2013**
(21) Anmeldenummer: 02702292.0
(22) Anmeldetag: 22.01.2002
(51) Int. Cl.: B60Q 1/52, B60R 21/01, G07C 5/08, B60R 22/00, B60R 16/02, B60K 28/02, G08B 21/00

(54) **GEFAHRENABWENDUNGSSYSTEM FÜR EIN FAHRZEUG**
HAZARD PREVENTION SYSTEM FOR A VEHICLE
SYSTEME DE PREVENTION DES RISQUES POUR UN VEHICULE

(30) Priorität: 26.01.2001 DE 10103401
(43) Veröffentlichungstag der Anmeldung: 22.10.2003
(73) Patentinhaber: Daimler AG, 70327 Stuttgart (DE)
(72) Erfinder: EBERLE, Walter, 73269 Hochdorf (DE); HARTLIEB, Markus, 72141 Waldorfhäslach (DE); HESS, Markus, 73666 Baltmannsweiler (DE); MAYER, Christian, 71254 Ditzingen (DE); PAVIOT, Florent, 70794 Filderstadt (DE); ROTHE, Siegfried, 73770 Denkendorf (DE); STIEGLER, Roland, 73732 Esslingen (DE)
(74) Vertreter: JENSEN & SON
(86) Internationale Anmeldenummer: PCT/EP2002/000577
(87) Internationale Veröffentlichungsnummer: WO 2002/058962

(56) Entgegenhaltungen:
- WO-A-99/01315
- DE-A- 4 338 244
- US-A- 5 821 860
- US-A- 6 060 989
- US-A- 6 061 610

## Beschreibung

Die Erfindung betrifft ein Gefahrenabwendungssystem für ein Fahrzeug.

Heutige Systeme zur Erhöhung der Sicherheit und des Komforts für die Insassen eines Kraftfahrzeugs bedienen sich einer Vielzahl von Einrichtungen zur Erfassung von Informationen. Insbesondere werden Fahrzustandsgrößen, Umgebungsdaten und in zunehmendem Maße Informationen über die Insassen und den Fahrer des Fahrzeugs erfasst.

Unter den Fahrzustandsgrößen werden Größen wie Fahrzeuggeschwindigkeit, Gier-, Längs- und Querbeschleunigungen, Bremspedal- und Fahrpedalstellung, Lenkwinkel, der Status von Bedienelementen wie Blinker und Warnblinklicht und der Status von Sensoren und Steuergeräten verstanden.

Als Umgebungsdaten sind solche Daten bezeichnet, welche von Umgebungssensoren, Telematiksystemen und durch Kommunikation des Fahrzeugs mit anderen Fahrzeugen und stationären Kommunikationssystemen bereitgestellt werden. Beispiele für Umgebungsdaten sind Informationen zum aktuellen Ort (z.B. ob sich die befahrene Wegstrecke in einem Wohngebiet, am Waldrand oder auf einer Brücke befindet), zur Straßenkategorie (z.B. ob die befahrene Straße eine Autobahn, eine Nebenstraße, einspurig, mehrspurig, mit oder ohne Gegenverkehr ist) und zur Fahrspur auf der das eigene Fahrzeug fährt. Weitere Umgebungsdaten sind Straßenzustand, Temperatur, Witterung, Lichtverhältnisse, Umgebungsgeräusche, Luftqualität und Windverhältnisse, Geschwindigkeit, Abstand, Bewegungsrichtung, Art und Zustand von vorausfahrenden, benachbarten, nachfolgenden oder entgegenkommenden Fahrzeugen und von anderen Verkehrsteilnehmern.

Informationen über die Insassen und den Fahrer sind beispielsweise die Sitzbelegung, das Insassengewicht, die Insassengröße und insbesondere die Insassenposition. Eine Erfassung der Fahreraktivität umfasst darüber hinaus beispielsweise die Erkennung der Augenbewegung, der Blickrichtung, aber auch die Bedienvorgänge von Bedienelementen, wie beispielsweise Radio, Lenkrad, Gangwählhebel, Bremspedal, Spiegelverstellung, Klimaanlage, Sitzverstellung, Sprachbedienungseinrichtung, Navigationsmodul und Mobiltelefon.

Aus solchen Informationen lässt sich auf eine Gefährdung der Insassen oder auf eine Gefährdung anderer Verkehrsteilnehmer schließen. Systeme zur Verwertung dieser Informationen zur Verringerung einer Gefährdung der Insassen von Kraftfahrzeugen sind bekannt.

Aus dem nächstliegenden Stand der Technik DE 43 38 244 C2 ist ein Gefahrenabwendungsystem bekannt, welches ein Fahrzustandsüberwachungssystem, ein Umgebungsüberwachungssystem, ein Fahrerüberwachungssystem und eine Einrichtung zur Durchführung eines Gefahrenabwendungsvorgangs aufweist. Aus den Daten über Bewegungs- und Betriebszustand und den Umgebungsdaten wird eine Gefahrensituation bestimmt und deren Gefahrenpotential bewertet. Befindet sich das Fahrzeug in einer Gefahrensituation, wird aufgrund der Daten über den Zustand und das Verhalten des Fahrers entschieden, ob dieser die Gefahrensituation wahrgenommen hat. Ausschließlich dann, wenn der Fahrer die Gefahrensituation nicht wahrgenommen hat, wird ein Gefahrenabwendungsvorgang durchgeführt. Zur Abwendung der Gefahr wird ein optisches oder ein akustisches Signal ausgegeben oder in die Fahrdynamik des Fahrzeugs eingegriffen.

Neben der Wahrnehmung der Gefahrensituation kann der Fahrer noch weitere Informationen, z.B. Streckeninformationen, Radioinformationen oder Gesprächsinformationen wahrnehmen. Die Fähigkeiten zur gleichzeitigen Wahrnehmung mehrerer Informationen und zur schnellen Verarbeitung der wahrgenommenen Informationen ist bei Menschen unterschiedlich stark ausgeprägt. Aufgrund einer variierenden Informationsdichte während einer Fahrt ergibt sich für den Fahrer, in Abhängigkeit der Situation, eine unterschiedlich starke Belastung. Jeder Fahrer hat eine individuell unterschiedliche Belastbarkeit und damit zusammenhängend eine individuell unterschiedliche Wahrnehmungsfähigkeit, sowie individuelle langfristige Veränderungen und kurzfristige Schwankungen seiner Belastbarkeit und Wahrnehmungsfähigkeit. Schwankende Belastbarkeiten und variierende objektive Belastungen können dazu führen, dass bei einem allgemeinen warnkonzept, bei welchem die individuelle Belastung nicht berücksichtigt wird, eine Warnmeldung an den Fahrer zu früh oder zu spät erfolgt und somit einer Gefahrensituation nur unzureichend entgegenwirkt wird.

Als weiterer Stand der Technik wird die US 5 821 860 genannt. Darin wird ein Verfahren zur Erfassung und Beurteilung des Fahrverhaltens beschrieben, bei dem Gierrate und Geschwindigkeit des Fahrzeugs ausgewertet werden. Für den Fall dass das Fahrerverhalten von einer Normalverhalten abweicht wird eine Warnung an den Fahrer ausgegeben.

Ein ähnliches Verfahren, bei dem das Fahrvermögen eines Fahrers mittels Sensordaten beurteilt wird, ist auch aus der US 6 060 989 bekannt. Bei erkanntem Unvermögen wird einer vorgegebenen Eskalation entsprechend gewarnt, die Fahrgeschwindigkeit begrenzt, warnblinker eingeschaltet und eine telefonische Verbindung hergestellt.

Als weiterer Stand der Technik wird die WO 99/01315 genannt. Darin ist ein Fahrzeug mit verstell- und einstellbaren Aggregaten, wie z. B. Motor, Getriebe, Fahrwerk, Sitz, Wegfahrsperre, Klimaanlage usw. beschrieben. Zur benutzerspezifischen Konfiguration eines Aggregats wird die Identität des Fahrers festgestellt. Die benutzerspezifischen Eigenschaften werden abgerufen oder eingestellt, indem anhand der Identität und der benutzerspezifischen Eigenschaften eine vordefinierte benutzerspezifische Einstellung des Aggregats erfolgt. Diese Einstellung kann durch den Hersteller, z. B. am Band-Ende bei der Fabrikation des Fahrzeugs oder individuell durch Fahrer bei der Inbetriebnahme des Fahrzeugs erfolgen. Die benutzerspezifischen Daten können in einem Systemspeicher abgelegt sein und durch ein geeignetes Medium, wie z. B. die Sprache, eine Chip-Karte, die Eingabe einer persönlichen Identifikations-Nummer oder dergleichen, aktiviert werden.

Aufgabe der Erfindung ist es die Häufigkeit von Unfällen bei Kraftfahrzeugen zu verringern und die Unfallschwere bei Unfällen zu vermindern. Diese Aufgabe wird erfindungsgemäß durch die Merkmale des Anspruchs 1 gelöst.

Das Gefahrenabwendungssystem für ein Fahrzeug enthält eine Einrichtung zur Erfassung von Fahrzustandsgrößen, eine Einrichtung zur Erfassung von Umgebungsdaten, eine Einrichtung zur Erfassung der Fahreraktivität und eine Datenverarbeitungseinrichtung. Die Datenverarbeitungseinrichtung verarbeitet die erfassten Daten und steuert eine Sicherheitseinrichtung entsprechend einer vorgegebenen Steuerstrategie an. Erfindungsgemäß weist das Fahrzeug eine Einrichtung zur Identifikation des Fahrers auf. Weiterhin leitet die Datenverarbeitungseinrichtung aus den Fahrzustandsgrößen, den Umgebungsdaten und den Daten über die Aktivität des Fahrers ein auf den Fahrer individuell bezogenes Maß ab, welches charakteristisch ist für die momentane Belastung des Fahrers. Von einer Steuereinrichtung wird die Steuerstrategie zur Ansteuerung der Sicherheitseinrichtung an das Maß für die Belastung des Fahrers angepasst. Vorteil dieses Gefahrenabwendungssystems für ein Fahrzeug ist, dass die Sicherheit und der Komfort für den Fahrer, und die Sicherheit für die Insassen und für andere Verkehrsteilnehmer erhöht wird.

Die Fahreridentifikation erfolgt durch Auswertung fahrzeugbezogener Größen, das heißt es werden beispielsweise Daten aus der Getriebe- oder Motorsteuerung übernommen, welche zur Beschreibung des Fahrertypus (aggressiv, nervös, zurückhaltend, dynamisch) dienen. Zusätzlich werden Eingriffe des Fahrers in Fahrdynamiksysteme wie ABS (Antiblockiersystem), ESP (Elektronisches Stabilitäts-Programm, Fahrstabilisierungssystem), BAS (Bremsassistenzsystem) erfasst und ausgewertet. Persönliche Merkmale wie die Sitzeinstellung, Rückspiegeleinstellung, Klimaeinstellung oder der bevorzugte Radiosender können zur Identifikation des Fahrers herangezogen werden. Alternativ erfolgt die Fahreridentifikation über eine personenbezogene Nutzungsberechtigung (beispielsweise Schlüssel, Keyless-Go-Karte) oder durch Augenerkennung, Spracherkennung, Fingerabdruckerkennung).

In einer Weiterbildung des Gefahrenabwendungssystems weist das Fahrzeug eine Einrichtung zur Speicherung der fahrerbezogenen Historie auf, welche für die jeweiligen Fahrer charakteristische Daten enthält. Die Datenverarbeitungseinrichtung zieht zusätzlich zu den im Anspruch 1 genannten Informationen die fahrerbezogene Historie heran, um ein Maß für die Belastung des Fahrers abzuleiten. Von der Einrichtung zur Speicherung der fahrerbezogenen Historie wird insbesondere die Fahreraktivität erfasst und eine Historie der Fahreraktivität angelegt. Die fahrerbezogene Historie kann zusätzlich Umgebungsdaten und Fahrzustandsgrößen enthalten. Es kann beispielsweise einem jeden Fahrer ein Streckenprofil, ein Geschwindigkeitsprofil, eine regelmäßig gefahrene individuelle Fahrstrecke und ein individueller Sicherheitsabstand zugeordnet werden. Bei der fahrerbezogenen Historie kann zwischen einer langfristigen Historie und einer kurzfristigen Historie unterschieden werden. Die kurzfristige Historie enthält die charakteristischen Merkmale der aktuellen Fahrt oder eines anderen vorgegebenen Zeitraums, beispielsweise eines Tages. Die langfristige fahrerbezogene Historie enthält die charakteristischen individuellen Merkmale des Fahrers seit einem vorgegebenen längeren Zeitraum, wie beispielsweise seit dem letzten Besitzerwechsel des Fahrzeugs, seit einer Krankheit oder einem Unfall des Fahrers, seit dem letzten Reifenwechsel oder Service/Kundendienst oder seit dem Wechsel der Arbeitsstätte des Fahrers. Mittels einer Historienauswertung wird beispielsweise erkannt, ob es sich bei der aktuellen Fahrt um eine Routinefahrt handelt, welche durch ein verändertes Unfallrisiko gekennzeichnet ist. Weiterhin können bei einer Risikobewertung besondere Stärken, Schwächen und Besonderheiten des Fahrers berücksichtigt werden. Diese Merkmale betreffen beispielsweise die Aufmerksamkeit (vermindert bei Routinefahrt), die Wahrnehmung (unsichere Fahrweise bei Nachtfahrten gegenüber Tagfahrten), das Reaktionsvermögen (längere Zeit bis zu einer Pedalbetätigung) oder die individuelle Leistungsfähigkeit, beispielsweise bei einer gleichzeitigen Bedienung mehrerer Funktionen (z.B. Fahraufgabe plus Navigation plus Mobilfunk). Vorteil dieser Weiterbildung des Gefahrenabwendungssystems ist, dass die Ermittlung des Maßes für die Belastung des Fahrers verbessert wird, wodurch die Sicherheit im Straßenverkehr weiter erhöht wird.

In einer Ausgestaltung des Gefahrenabwendungssystems für ein Fahrzeug umfasst die Sicherheitseinrichtung ein Informations- und Warnsystem oder wird durch ein Informations- und Warnsystem gebildet. Die Verarbeitung der erfassten Daten erfolgt durch die Datenverarbeitungseinrichtung in der Weise, dass diejenigen Handlungsmöglichkeiten des Fahrers ermittelt werden, welche eine Gefährdung verringern oder ausschließen, und dass überprüft wird, ob der Fahrer entsprechend den ermittelten Handlungsmöglichkeiten handelt. Es wird außerdem ermittelt, ob sich das Maß der Gefährdung schnell ändert und ob dieses Maß innerhalb vorgebbarer Grenzen liegt. Überschreitet das Maß der Gefährdung eine vorgebbare Grenze, so wird der Fahrer normalerweise in einem ersten Schritt informiert und/oder in Abhängigkeit der Stärke und des Verlaufs der Gefährdung gewarnt.

Im folgenden Beispiel fährt das Fahrzeug mit Abstandsregeltempomat auf einer gut ausgebauten Straße. Die Fahreraktivität wird erfasst und die Reaktionsfähigkeit, der Aufmerksamkeitsgrad usw. werden bewertet. Aus diesen ermittelten und bewerteten Fahrerdaten, weiteren individuellen Fahrerdaten und beispielsweise den Umgebungsdaten wird eine aktuelle Fahrerbelastung abgeleitet. Aus dieser Fahrerbelastung wird der Zeitpunkt einer Fahrerinformation/Warnung, beispielsweise einer Übernahmeaufforderung berechnet, welche vom Abstandsregeltempomaten in vorgegebenen Situationen erfolgt. Verändert sich die Fahrsituation nun dahingehend, dass der Fahrer aufgefordert werden soll die Längsregelung des Fahrzeugs zu übernehmen, weil sich der Abstand zu einem Hindernis unter einen vorgebbaren Sicherheitsabstand reduziert, so wird der Fahrer eine erste Information/Warnung erhalten. Erfolgt nun nach einer Wartezeit, welche insbesondere von der Fahrerbelastung abhängig vorgegeben ist, vom Fahrer keine Reaktion, so wird eine zweite Warnung erfolgen. Die Warnungen können so ausgeführt werden, dass die normale Reaktion eines Fahrers auf diese Warnungen eine der Gefahrensituation entgegensteuernde Handlung hervorruft. Hierfür vorgesehene Warnungen des Fahrers können unterschiedliche Sinneskanäle ansprechen und beispielsweise akustisch, optisch, haptisch oder olfaktorisch sein.

Alternativ oder ergänzend zu einer Fahrerinformation/Warnung kann ein Warnsignal an einen anderen Verkehrsteilnehmer, insbesondere an einen nichtmotorisierten Verkehrsteilnehmer übermittelt werden. Es kann bei einer drohenden Kollision mit einem Fußgänger ein Geräusch oder ein Lichtsignal erzeugt werden, welches den Fußgänger zu einer solchen Reaktion veranlassen soll, die dazu geeignet ist die Kollision zu verhindern, beispielsweise indem der Fußgänger anhält. Die Signale können in Abhängigkeit der Gefahrensituation variiert werden, beispielsweise kann ein Lichtsignal in der Intensität, in der Blinkfrequenz, in Farbe und Richtung verändert werden. In einer anderen Situation kann durch ein akustisches Warnsignal, wie beispielsweise einem Reifenquietschen, bewirkt werden, dass ein Fahrradfahrer einen ursprünglich geplanten Fahrtrichtungswechsel nicht vornimmt, wodurch eine Kollision des Fahrzeugs mit dem Fahrradfahrer vermieden wird. Die beschriebene Warnung anderer Verkehrsteilnehmer (Partnerwarnung), erfolgt erfindungsgemäß unter Berücksichtigung der individuellen Fahrerbelastung und der möglichen und/oder der tatsächlich ausgeführten Handlungen des Fahrers.

Es ist auch eine Partnerwarnung ohne Berücksichtigung der individuellen Fahrerbelastung aber unter Berücksichtigung der möglichen und/oder der tatsächlichen Handlungen des Fahrers möglich. Außerdem ist eine Partnerwarnung ohne Berücksichtigung der individuellen Fahrerbelastung und ohne Berücksichtigung der möglichen und/oder der tatsächlichen Handlungen des Fahrers durchführbar um die Unfallwahrscheinlichkeit oder die Unfallschwere zu verringern. Eine Partnerwarnung für nichtmotorisierte Verkehrsteilnehmer kann beispielsweise einen Fußgänger anhupen um zu verhindern, dass er die Fahrbahn betritt oder auf der soeben betretenen Fahrbahn in die voraussichtliche Fahrspur eines Fahrzeugs schreitet.

In einer anderen Ausgestaltung des Gefahrenabwendungssystems für ein Fahrzeug umfasst die Sicherheitseinrichtung ein Fahrdynamikregelsystem. Hierbei kann die Sicherheitseinrichtung sowohl ausschließlich ein Fahrdynamikregelsystem als auch ein Fahrdynamikregelsystem in Verbindung mit einem Information- und Warnsystem umfassen oder aus diesen Systemen gebildet werden. Erfolgt mit oder ohne vorherige Information/Warnung des Fahrers keine Fahrerreaktion, eine nicht ausreichende Fahrerreaktion oder eine Fahrerreaktion, welche die Gefährdung erhöhen würde, so erfolgt durch das Gefahrenabwendungssystem ein Eingriff in die Fahrdynamik. Dies kann ein Eingriff in die Bremsanlage, beispielsweise eine Notbremsung, ein Eingriff in die Fahrzeuglenkung, beispielsweise ein Ausweichmanöver oder ein anderer fahrdynamischer Eingriff sein. Ein solcher Eingriff des Gefahrenabwendungssystems kann zur Unfallvermeidung und zur Verminderung der Unfallschwere erfolgen. Abgebrochen wird ein solcher Eingriff, sobald eine ausreichende Fahrerreaktion oder ein Reduktion der Gefährdung unter einen vorgegebenen Wert erfolgt. Ein Beispiel für eine Fahrerreaktion, welche zu einem Abbruch eines Eingriffs führt ist die Betätigung des Bremspedals durch den Fahrer während einer automatischen Bremsung. Hierdurch übernimmt der Fahrer den Bremsvorgang in seine Verantwortung und die automatische Bremsung wird beendet.

In einer weiteren Ausgestaltung des Gefahrenabwendungssystems für ein Fahrzeug umfasst die Sicherheitseinrichtung ein Insassenschutzsystem, welches auf die Bewegung eines Insassen wirkt und die Unfallfolgen mildern soll. Mit oder ohne Vorschalten der Informations-/Warnfunktion und/oder eines Eingriffs in die Fahrdynamik wird vom Gefahrenabwendungssystem bei einer vorgegebenen, unter Berücksichtigung der Fahrerbelastung ermittelten Gefährdung, das Insassenschutzsystem angesteuert, welches auf die Bewegung des Insassen wirkt. Beispiele von Schutzsystemen, welche auf die Bewegung eines Insassen wirken, sind konventionelle Rückhaltesysteme wie Airbags und Gurtstraffer und neuartige Vorrichtungen zur Energieabsorption, bei welchen die Härte und das Deformationsverhalten schaltbar sind. Auch eine Vorkonditionierung der Insassen, beispielsweise indem die Einstellung der Sitzanlage entsprechend der Gefährdung angepasst wird oder indem reversible Schutzsysteme, wie elektromotorischer Gurtstraffer angesteuert werden sind unter Insassenschutzsystemen, welche auf die Bewegung eines Insassen wirken, zu verstehen.

Im Anschluss an eine Gefahrensituation, insbesondere nach einem Unfall, überprüft das Gefahrenabwendungssystem, ob der Fahrer die Kontrolle über das Fahrzeug ausübt und ob eine weitere Gefährdung, beispielsweise durch eine mögliche Sekundärkollision vorhanden ist. Das Fahrzeug wird gegebenenfalls in einen sicheren Zustand versetzt (Zündung aus, Treibstoffversorgung aus, Feststellbremse ein, Kontrolle über den Antrieb) und ein automatischer Notruf wird abgesetzt. Mittels der erfassten Parameter wird eine Verletzungsschwere abgeschätzt und an die Rettungskräfte übermittelt.

Über eine Ermittlung der aktuellen Fahrerbelastung hinausgehend ist es möglich, aus den erfassten Daten eine zu erwartende Fahrerbelastung vorherzusagen, welche umso unsicherer ist, je länger der Vorhersagezeitraum gewählt wird. Durch eine solche Vorhersage ist es möglich den Zeitpunkt für Informationen/Warnungen an den Fahrer so zu legen, dass der Gewinn an Sicherheit möglichst groß ist. Beispielsweise wird eine Information/Warnmeldung vorgezogen um sie rechtzeitig vor einer erwarteten erhöhten Belastung des Fahrers auszugeben oder sie wird verzögert, um sie erst im Anschluss an eine kurzfristig erhöhte Fahrerbelastung auszugeben. Alternativ oder zusätzlich hierzu kann ein geeigneter Sinneskanal für die Information/Warnung gewählt werden, beispielsweise kann bei einer großen optischen Belastung des Fahrers eine akustische, haptische oder olfaktorische Information/Warnmeldung ausgegeben werden. Bei einer großen akustischen Belastung kann entsprechend eine optische, haptische oder olfaktorische Warnung/Information erfolgen oder/und es wird die Belastung des Fahrers reduziert, indem beispielsweise die Radiolautstärke verringert wird.

Es gibt nun verschiedene Möglichkeiten, die Lehre der vorliegenden Erfindung in vorteilhafter Weise auszugestalten. Nachfolgend wird eine vorteilhafte Ausführungsform des erfindungsgemäßen Gefahrenabwendungssystems anhand der Zeichnung näher beschrieben.

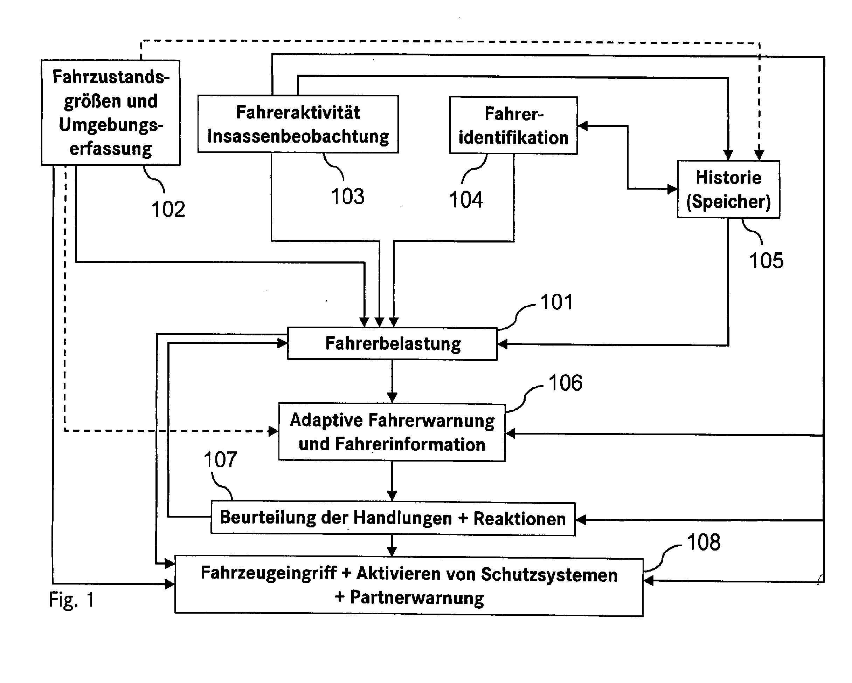

Die Fig. 1 zeigt in schematischer Darstellung ein Blockschaltbild einer vorteilhaften Ausführungsform des erfindungsgemäßen Gefahrenabwendungssystems. Zentraler Bestandteil des Gefahrenabwendungssystems ist das Modul zur Ermittlung einer Fahrerbelastung 101, welches in einer einfachen Ausführung die Stärke der Fahrerbelastung in mehrere Klassen einteilt. Ein Beispiel einer Klasseneinteilung sind die Klassen: keine Belastung, geringe Belastung, mittlere Belastung, erhöhte Belastung, hohe Belastung und Überlastung. In einer verfeinerten Ausführung wird von dem Modul 101 die Fahrerbelastung kategorisiert und eine ermittelte Belastungsklasse wird zusätzlich einer oder mehrerer Belastungskategorien zugeordnet. Beispiele für Belastungskategorien sind: akustische Belastung, optische Belastung, Dauerbelastung, Belastungsspitze und Belastung durch externe Einflüsse. Um die individuelle Fahrerbelastung zu ermitteln, werden Informationen aus den Modulen Fahrzustandsgrößen und Umgebungserfassung 102, Fahreraktivität und Insassenbeobachtung 103 und Fahreridentifikation 104 herangezogen. Die Module Fahrzustandsgrößen und Umgebungserfassung 102, Fahreraktivität und Insassenbeobachtung 103 und Fahreridentifikation 104 sind mit einem Speicher 105 zur Aufzeichnung von Merkmalen des Fahrers verbunden, welche den Fahrer charakterisieren, zu seiner Identifikation herangezogen werden können oder eine Bewertung des Zustands des Fahrers durch einen Vergleich der gespeicherten Daten mit aktuellen Daten erlauben. Daten zur Charakterisierung des Fahrers sind beispielsweise persönliche Stärken und Schwächen, Erfahrung, Typologien, medizinische Daten, Geschlecht und Alter. Daten, welche zur Identifikation herangezogen werden können sind beispielsweise Stimme, Fahrertyp oder Bedienmuster und Position von Verstellvorrichtungen wie Klimaanlage, Pedale, Sitzverstellung, Lenkrad und Joystick. Durch das Modul zur Erfassung der Fahreraktivität und zur Insassenbeobachtung 103 werden auch Mimik, Gestik und physiologische Daten des Fahrers und die Position und die Handlungen der Insassen erfasst, welche insbesondere zur Ermittlung der Belastung des Fahrers herangezogen werden. Weitere Parameter, welche vom Modul 103 ermittelt und im Modul 101 berücksichtigt werden können, sind die Ermüdung des Fahrers, die Kondition des Fahrers, das Reaktivverhalten und die Reaktionszeit des Fahrers, die Fahrzeit und das aktuelle Geschwindigkeitsprofil. Zur Erfassung dieser Parameter sind teilweise spezielle Sensoren erforderlich. Beispielsweise wird die Ermüdung des Fahrers unter Heranziehung einer Blickrichtungserkennung, einer Augenbeobachtung und/oder mittels der Erfassung des Lenkwinkels und der Pedalbetätigung ermittelt. Mittels Modul 102 werden Daten zum Streckenverlauf erfasst, so dass beispielsweise die Fahrt auf einer Routinefahrstrecke durch einen Vergleich mit dem Speicher 105 erkannt wird.

Zur Ermittlung der Fahrerbelastung in Modul 101 werden zusätzlich Daten aus dem Speicher 105 herangezogen. Insbesondere sind dies Daten über das Verhalten des Fahrers in ähnlichen Situationen wie der zu beurteilenden Situation. Falls Daten über die Umgebung oder den Streckenverlauf abgespeichert wurden, so werden diese bei der Ermittlung der Fahrerbelastung ebenfalls berücksichtigt.

Modul 106 hat die Funktion unter einer Berücksichtigung der individuellen Fahrerbelastung, den Fahrer derart zu informieren und zu warnen, dass dieser die Gefahrensituation abwendet. Dies geschieht beispielsweise dadurch, dass der Fahrer entlastet wird, indem die Audiolautstärke vermindert wird. Eine andere Möglichkeit die Fahrerwarnung anzupassen ist eine Adaption der Warnzeitpunkte an die Fahrerbelastung, an den Fahrtyp und an den Wahrnehmungscharakter des Fahrers. Weiterhin kann eine belastungsabhängige oder eine gefahrenabhängige Auswahl der Sinneskanäle zur Fahrerinformation und Warnung erfolgen.

Nach einer erfolgten Warnung/Information erfolgt in Modul 107 die Beurteilung der Reaktion des Fahrers auf die Warnung/Information und es werden die Handlungen des Fahrers dahingehend bewertet, ob er die Information/Warnung wahrgenommen hat. Hierfür kann eine Blickrichtungserkennung herangezogen werden, welche eine Entscheidungsgrundlage dafür bietet, ob der Fahrer eine Warnung oder ein Hindernis wahrgenommen hat. Alternativ oder ergänzend ist es möglich die Bewertung der Fahrerhandlungen dahingehend durchzuführen, ob sie geeignet sind die Gefahr abzuwenden oder mögliche Unfallfolgen zu vermindern. Die Bewertung der Handlung und Reaktion des Fahrers aus Modul 107 wird bei der Ermittlung der Fahrerbelastung in Modul 101 berücksichtigt.

Abhängig vom Ergebnis der Beurteilung in Modul 107 wird vom Modul 108 ein möglicher Eingriff in die Fahrdynamik, die Aktivierung von Schutzsystemen oder und eine Warnung anderer Verkehrsteilnehmer veranlasst. Die aktivierbaren Schutzsysteme können kinematisch oder dynamisch wirken indem ein Rückhaltesystem wirksam wird oder indem ein Dämpfungselement aktiviert wird. Hierfür können beispielweise eine Federsteifigkeit, eine Materialeigenschaft, ein Systemdruck oder das Strömungsverhalten einer Flüssigkeit verändert werden.

## Patentansprüche

1. Gefahrenabwendungssystem für ein Fahrzeug mit:
- einer Einrichtung (102) zur Erfassung von Fahrzustandsgrößen und Umgebungsdaten, wobei die Umgebungsdaten von Umgebungssensoren, Telematiksystemen oder durch Kommunikation des Fahrzeugs mit anderen Fahrzeugen und stationären Kommunikationssystemen bereitgestellt werden,
- einer Einrichtung (103) zur Erfassung der Fahreraktivität, mindestens der Bedienvorgänge von Bedienelementen,
- einer Einrichtung (104) zur Identifikation des Fahrers
- einer Datenverarbeitungseinrichtung, welche aus den Fahrzustandsgrößen und Umgebungsdaten (102), den Daten über die Aktivität des Fahrers (103) und der Fahreridentifikation (104) eine auf den Fahrer individuell bezogene Fahrerbelastung (101) ableitet,
- einer Sicherheitseinrichtung, welche nach einer vorgegebenen Steuerstrategie entsprechend der individuellen Fahrerbelastung angesteuert wird.

2. Gefahrenabwendungssystem für ein Fahrzeug nach Anspruch 1, **dadurch gekennzeichnet, dass**
- das Fahrzeug eine Einrichtung zur Speicherung der fahrerbezogenen Historie aufweist, welche für den Fahrer charakteristische Daten enthält,
- die Datenverarbeitungseinrichtung zusätzlich die fahrerbezogene Historie heranzieht, um die individuelle Fahrerbelastung abzuleiten.

3. Gefahrenabwendungssystem für ein Fahrzeug nach einem der Ansprüche 1 und 2, **dadurch gekennzeichnet, dass** die Sicherheitseinrichtung ein Informations- und Warnsystem umfasst.

4. Gefahrenabwendungssystem für ein Fahrzeug nach einem der Ansprüche 1 und 2, **dadurch gekennzeichnet, dass** die Sicherheitseinrichtung ein Fahrdynamikregelsystem umfasst.

5. Gefahrenabwendungssystem für ein Fahrzeug nach einem der Ansprüche 1 und 2, **dadurch gekennzeichnet, dass** die Sicherheitseinrichtung ein Insassenschutzsystem umfasst, welches auf die Bewegung eines Insassen wirkt und die Unfallfolgen mildern soll.

## Claims

1. Hazard prevention system for a vehicle, having
- a means (102) for detecting vehicle state values and environment data, the environment data being provided by environment sensors, telematics systems or through communication of the vehicle with other vehicles and stationary communication systems,
- a means (103) for detecting the driver activity, at least of the operating processes of operating elements,
- a means (104) for identifying the driver,
- a data processing means for deducing the individual driver's stress level (101) from the driving state values and environment data (102), the data relating to the activity of the driver (103) and the driver identification (104),
- a security means which is activated according to a predefined control strategy corresponding to the individual driver's stress level.

2. Hazard prevention system for a vehicle according to claim 1, **characterised in that**
- the vehicle comprises a means for storing the driver-related history containing characteristic data for the driver,
- the data processing means additionally consults the driver-related history in order to deduce the individual driver's stress level.

3. Hazard prevention system for a vehicle according to one of the claims 1 and 2, **characterised in that** the security means comprises an information and warning system.

4. Hazard prevention system for a vehicle according to one of the claims 1 and 2, **characterised in that** the security means comprises a vehicle dynamic control system.

5. Hazard prevention system for a motor vehicle according to one of the claims 1 and 2, **characterised in that** the security means comprises an occupant protection system which acts on the movement of an occupant and is intended to alleviate the consequences of an accident.

## Revendications

1. Système de prévention du danger pour un véhicule avec :
- un dispositif (102) pour l'enregistrement des dimensions et des données environnementales, lesdites données environnementales proviennent de capteurs, de systèmes télématiques ou de la communication du véhicule avec d'autres véhicules et les systèmes de communication stationnaires du véhicule,
- un dispositif (103) pour l'enregistrement de l'activité du conducteur, au moins le fonctionnement des éléments de commande,
- un dispositif (104) d'identification du conducteur,
- un dispositif de traitement de données, qui découlent des données relatives aux dimensions et l'environnement du véhicule (102), les données relatives à l'activité du conducteur (103) et l'identification du conducteur (104), ainsi que celles relatives au poids individuel du conducteur (101),
- un dispositif de sécurité actionné selon une stratégie de contrôle prédéterminée en fonction du poids individuel du conducteur.

2. Système de prévention du danger pour un véhicule selon la revendication 1, **caractérisé en ce que**
- le véhicule comprend un dispositif de stockage de l'historique du conducteur contenant des données caractéristiques du conducteur,
- le dispositif de traitement des données met en outre l'historique du conducteur à contribution, pour fournir le poids individuel du conducteur.

3. Système de prévention du danger pour un véhicule selon les revendications 1 et 2, **caractérisé en ce que** le dispositif de sécurité comprend un système d'information et d'avertissement.

4. Système de prévention du danger pour un véhicule selon les revendications 1 et 2, **caractérisé en ce que** le dispositif de sécurité comprend un système de régulation de la dynamique de mouvement du véhicule.

5. Système de prévention du danger pour un véhicule selon les revendications 1 et 2, **caractérisé en ce que** le dispositif de sécurité comprend un système de protection des occupants d'un véhicule, qui agit sur les mouvements des occupants et atténue les conséquences d'un accident.
